# EUROPÄISCHE PATENTANMELDUNG

(11) **EP 1 970 255 A2**
(43) Veröffentlichungstag der Anmeldung: **17.09.2008**
(21) Anmeldenummer: 08075184.5
(22) Anmeldetag: 11.03.2008
(51) Int. Cl.: B60R 11/02, B60N 3/10, B60R 11/00

(54) **Anordnung mit Bedienteil, insbesondere für Einrichtungen in Kraftfahrzeugen**

(30) Priorität: 13.03.2007 DE 102007012620; 20.07.2007 DE 202007010307 U
(71) Anmelder: Funkwerk Dabendorf GmbH, 15806 Dabendorf (DE)
(72) Erfinder: Heldt, Ronald, 15809 Gross Machnow (DE); Redlich, Volkmar, 15838 Am Mellensee OT Klausdorf (DE)
(74) Vertreter: Patentanwälte Bressel und Partner

(57) **Zusammenfassung**

Die Erfindung betrifft eine Anordnung mit einem Getränkedosenhalter, insbesondere in einem Kraftfahrzeug, und einem Bedienteil (10) zur Steuerung zumindest einer Einrichtung in dem Kraftfahrzeug, wobei das Bedienteil in dem Getränkedosenhalter angeordnet ist, so dass es von einer Person in dem Fahrzeug betätigt werden kann, oder wobei das Bedienteil (10) an einem Einsatz (1), der in dem Getränkedosenhalter angeordnet ist, befestigt ist oder Teil des Einsatzes ist.

## Beschreibung

Die Erfindung betrifft eine Anordnung, insbesondere für die Verwendung in einem Kraftfahrzeug.

Moderne Kraftfahrzeuge haben in vielen Fällen einen oder mehrere Getränkedosenhalter, in den jeweils eine Getränkedose oder ein Glas oder Becher für Getränke eingebracht werden kann. Ferner gibt es in modernen Kraftfahrzeugen unterschiedliche elektrische und/oder elektronische Einrichtungen, die im Werk oder nachträglich im Kraftfahrzeug verbaut werden. Solche Einrichtungen sollen vom Fahrer oder von anderen Personen bedient werden können. Insbesondere wenn eine solche Einrichtung nachträglich eingebaut wird, ist es jedoch mit Einbußen an Platz verbunden und stört das ästhetische Empfinden der Benutzer, wenn die Einrichtung im Fahrzeuginnenraum angeordnet wird, wo sich die Personen bzw. Benutzer aufhalten. Es ist daher von Vorteil, die Einrichtung an einem anderen Ort anzuordnen, z. B. am Rande des Motorraums zum Armaturenbrett hin.

Das Bedienteil aber muss in dem Fahrzeuginnenraum angeordnet werden. Auch hier stellt sich wieder das Problem der Anordnung, auch wenn der Platzbedarf geringer ist als für die gesamte Einrichtung. Ein Anbringen an der Wand des Innenraums wirkt aber dennoch auf das ästhetische Empfinden der Benutzer und Insassen störend.

Es ist daher eine Aufgabe der vorliegenden Erfindung, den zur Verfügung stehenden Platz möglichst effektiv zu nutzen und das ästhetische Empfinden von Personen möglichst wenig zu beeinträchtigen.

Es wird eine Anordnung mit einem Getränkedosenhalter vorgeschlagen, wobei die Anordnung insbesondere in einem Kraftfahrzeug angeordnet sein kann. Die Anordnung weist ein Bedienteil zur Steuerung zumindest einer Einrichtung in dem Kraftfahrzeug auf, wobei das Bedienteil in dem Getränkedosenhalter angeordnet ist, so dass es von einer Person in dem Fahrzeug betätigt werden kann. Alternativ ist das Bedienteil an einem Einsatz, der in dem Getränkedosenhalter angeordnet ist, befestigt oder Teil des Einsatzes. Auch in diesem Fall kann das Bedienteil bequem von einer Person in dem Fahrzeug betätigt werden, insbesondere von dem Fahrer. Zum Umfang der Erfindung gehört auch eine Anordnung mit einem solchen Einsatz, an dem das Bedienteil befestigt ist, und ein Einsatz, dessen Teil das Bedienteil ist. Solche Einsätze sind dazu ausgestaltet und vorgesehen, in dem Getränkedosenhalter angeordnet zu werden.

Bei der Einrichtung handelt es sich vorzugsweise um eine Freisprecheinrichtung, die bei Benutzung eines Mobiltelefons ein freies Sprechen ohne die fortwährende Benutzung von Händen (insbesondere zum Halten des Mobiltelefons) ermöglicht.

Unter einer Freisprecheinrichtung wird eine Einrichtung verstanden, die es Personen in dem Fahrzeug ermöglicht, Telefongespräche zu führen, ohne das Mobiltelefon in den Händen halten zu müssen. Insbesondere kann in die Freisprecheinrichtung daher zumindest ein Mikrofon und/oder zumindest ein Lautsprecher integriert sein. Alternativ oder zusätzlich sind zumindest ein Mikrofon und/oder zumindest ein Lautsprecher über jeweils eine elektrische Verbindung mit der Freisprecheinrichtung verbunden und z. B. an dem Einsatz und/oder an anderer Stele in dem Fahrzeug angeordnet. Beim Führen eines Telefonats werden die empfangenen Sprachsignale über den zumindest einen Lautsprecher in akustische Signale umgewandelt und werden Laute in dem Fahrzeug-Innenraum über das zumindest eine Mikrofon empfangen, so dass entsprechende Signale über das Mobiltelefonnetz zu anderen Gesprächsteilnehmern übertragen werden können. Der oder die Lautsprecher können so angeordnet sein, dass die akustischen Signale im Fahrzeug-Innenraum gehört werden können. Alternativ oder zusätzlich kann zumindest ein Lautsprecher als Ohr-Lautsprecher für lediglich eine Person ausgestaltet sein, der z. B. am Ohr der Person befestigbar ist.

Wie beschrieben ist in die Freisprecheinrichtung nicht zwangsläufig ein Mikrofon und ein Lautsprecher integriert. Eine Freisprecheinrichtung zeichnet sich jedoch dadurch aus, dass sie in einem Freisprechbetrieb
- vom Mobiltelefon empfangene Ausgabesignale, die Audioinformationen zur akustischen Ausgabe an einen Benutzer des angekoppelten Mobiltelefons enthalten, umsetzt, verarbeitet und/oder zumindest an einen Lautsprecher weiterleitet, und/oder
- von einem Mikrofon aufgenommene Schallsignale umsetzt, verarbeitet und/oder zumindest an das an die Freisprecheinrichtung angekoppelte Mobiltelefon weiterleitet.

Bevorzugtermaßen ist die Freisprecheinrichtung an dem Einsatz befestigt oder ist der Einsatz ein Teil der Freisprecheinrichtung, wobei die Bedienelemente (sowie gegebenenfalls ein Lautsprecher und/oder ein Mikrofon) der Freisprecheinrichtung vorzugsweise außerhalb des Getränkedosenhalters angeordnet sind, wenn die Freisprecheinrichtung von dem Getränkedosenhalter gehalten wird.

Vorzugsweise ist der Lautsprecher in die Freisprecheinrichtung integriert, d.h Teil einer einstückigen Einheit, die die Freisprecheinrichtung aufweist.

Alternativ oder zusätzlich ist das Mikrofon in die Freisprecheinrichtung integriert. Es kann jedoch auch z. B. abnehmbar an der Freisprecheinrichtung und/oder an dem Einsatz befestigbar sein.

Vorzugsweise kann die Freisprecheinrichtung durch Sprachbefehle gesteuert werden (z. B. "zu Hause anrufen"). Zumindest aber ein Teil der Steuerfunktionen wird über das Bedienteil ausgeführt, z. B. das Ein- oder Ausschalten der Freisprecheinrichtung, die Einstellung der Lautstärke, mit der Sprachsignale über Lautsprecher ausgegeben werden, und/oder das Auswählen von Teilnehmern aus einer Liste, die auf einem Display in dem Fahrzeug angezeigt wird.

Der Getränkedosenhalter ist beispielsweise in einer Mittelkonsole zwischen den Vordersitzen eines Personenkraftwagens angeordnet. Auf diese Weise ist er (und damit das Bedienteil) sehr gut für den Fahrer oder den Beifahrer erreichbar.

Z. B. kann der Getränkedosenhalter als Ausnehmung in dem Material der Mittelkonsole ausgeformt sein.

Die von dem Bedienteil zu steuernde Einrichtung kann in dem Getränkedosenhalter angeordnet sein, sodass sie von dem Getränkedosenhalter gehalten wird. Die zu steuernde Einrichtung kann daher als der Einsatz bezeichnet werden. Dabei kann das Bedienteil Teil der zu steuernden Einrichtung sein oder an der zu steuernden Einrichtung befestigt sein. Diese Ausführungsform erlaubt eine besonders einfache Nachrüstung eines Kraftfahrzeugs mit einer Freisprecheinrichtung. Im einfachsten Fall kann die Freisprecheinrichtung (wie erwähnt) selbst einen Lautsprecher aufweisen und ein Mikrofon. In diesem Fall muss sogar keine Verbindung zwischen der Freisprecheinrichtung und im Fahrzeug verbauten Lautsprechern oder Mikrofonen hergestellt werden, wenngleich solche Verbindungen bevorzugt werden, da die Qualität des Freisprechbetriebes dann meist besser ist.

Das Bedienteil kann bei einer anderen Ausführungsform, bei der die zu steuernde Einrichtung nicht in dem Getränkedosenhalter angeordnet ist, über eine Kabelverbindung und/oder über eine drahtlose Verbindung mit der zu steuernden Einrichtung verbunden sein, sodass über die Verbindung Steuersignale zur Steuerung des Betriebes der Einrichtung übertragbar sind. Es bietet sich an, wenn der Getränkedosenhalter in der Mittelkonsole ausgeformt ist, die Kabelverbindung von unten (z. B. durch eine Bohrung im Boden des Getränkedosenhalters) in den von dem Getränkedosenhalter definierten Raum zum Halten von Gegenständen hineinzuführen.

Das Bedienteil kann ein Funkmodul, zum Beispiel gemäß dem Bluetooth-Standard, aufweisen und dadurch in der Lage sein, die Steuerbefehle, die durch die Bedienung des Bedienteils erzeugt werden, über eine Funkverbindung (d. h. drahtlos) an eine oder mehrere zu steuernde Einrichtungen zu übertragen. Bei den mehreren Einrichtungen handelt es sich z. B. um ein oder mehrere Mobiltelefone, einen mobilen Drucker, eine Navigationseinrichtung des Kraftfahrzeugs, ein Infotainment-System des Kraftfahrzeugs, eine Radio- und/oder Stereoanlage des Kraftfahrzeuges und/oder ein tragbares Gerät zum Abspielen von Musik (z. B. einen MP3-Spieler).

Die Freisprecheinrichtung kann z. B. über einen eingebauten elektrochemischen Energiespeicher mit elektrischer Energie für ihren Betrieb versorgt werden. Alternativ oder zusätzlich kann sie jedoch auch für einen Anschluss zum Anschließen eines Kabels verfügen, über das die z. B. mit einer Steckdose (etwa der 12 Volt-Zigarettenanzünder-Buchse) verbunden werden kann.

Es wird ferner ein Einsatz für einen Getränkedosenhalter vorgeschlagen, wobei der Einsatz eine Basis aufweist, die in eine im Wesentlichen zylindrische Ausnehmung eingebracht werden kann, welche der Aufnahme einer Getränkedose dient. Unter einer zylindrischen Ausnehmung wird auch eine Ausnehmung verstanden, die nicht rundherum von einer Zylinderwand begrenzt ist. Z. B. kann die Ausnehmung in eine weitere Ausnehmung übergehen, sodass sich die beiden Ausnehmungen überlappen. Wenn beide Ausnehmungen zylindrische Ausnehmungen sind, kann daher nur entweder in die eine oder die andere Ausnehmung ein zylindrischer Gegenstand eingebracht werden, der die Ausnehmung ausfüllt.

Bei einer besonders platzsparenden Ausführungsform des Einsatzes ist dieser ausziehbar. Vor oder bei dem Einsetzen des Einsatzes in den Getränkedosenhalter wird dieser ausgezogen. Z. B. weist der Einsatz mehrere Segmente auf, die in der Art eines Teleskops auf eine größere Länge ausgezogen werden können. Eine mechanische Arretierung kann verhindern, dass der Einsatz unbeabsichtigt kollabiert, während er in dem Getränkedosenhalter eingesetzt ist. Bei der ausziehbaren Ausführungsform nimmt der Einsatz weniger Platz ein, wenn er nicht benötigt wird.

Der Einsatz kann z. B. einen inneren Teil aufweisen, der den kreisförmigen Innenquerschnitt eines Getränkedosenhalters nicht ausfüllt. Von dem inneren Teil erstrecken sich vorzugsweise mehrere elastisch verformbare Vorsprünge radial nach außen. Wenn der Einsatz in den Getränkedosenhalter mit zylindrischem Innenraum eingesetzt wird, werden die Vorsprünge elastisch verformt und entsteht daher einer Anpresskraft, die den Einsatz an die Wand des Getränkedosenhalter anpresst. Z. B. können die Vorsprünge Lamellen sein, die sich von dem inneren Teil des Einsatzes radial nach außen erstrecken. Dabei kann der innere Teil z. B. eine zylindrische Form haben. Die Lamellen erstrecken sich zum Beispiel in dem Bereich, wo sie mit dem inneren Teil verbunden sind; etwa in Längsrichtung des Einsatzes, d. h. z. B. in axialer Richtung des Zylinders. Es kann sich jedoch auch um ringförmige Lamellen handeln, die sich in Umfangsrichtung um den Zylinder erstrecken.

Der Einsatz kann selbst z. B. eine Fernbedienung für eine elektrische und/oder elektronische Einrichtung in einem Kraftfahrzeug sein. Z. B. handelt es sich bei der Einrichtung um eine Freisprecheinrichtung für die Mobiltelefonie, um ein Diagnosesystem, ein Infotainment und/oder um ein Navigationssystem.

Auf diese Weise wird der in modernen Kraftfahrzeugen vorhandene Platz für Getränkedosen ausgenutzt. Da der Getränkedosenhalter ohnehin für die Aufnahme zusätzlicher Gegenstände konzipiert ist, wirkt das Einbringen eines Einsatzes nicht störend auf das ästhetische Empfinden von Personen. Ein Grund hierfür ist, dass zumindest ein Teil des Einsatzes in der im Wesentlichen zylindrischen Ausnehmung des Getränkedosenhalters verschwindet und nicht oder nicht vollständig von außen gesehen werden kann.

Dies hindert jedoch nicht, den erfindungsgemäßen Einsatz auch bei Haltern zu verwenden, die keine zylindrische Ausnehmung haben und z. B. lediglich einen ausklappbaren Boden und einen ausklappbaren Haltebügel aufweisen, um eine auf dem Boden stehende Getränkedose mit dem Bügel festzuhalten.

Vorzugsweise hat die Basis des Einsatzes eine Breite, die gleich dem Durchmesser einer Getränkedose ist, insbesondere einer Standard-Getränkedose für den deutschen Markt. In besonderer Ausgestaltung ist die Basis zylindrisch geformt, wobei jedoch im Verlauf der zylindrischen Außenoberfläche Ausnehmungen und/oder Vertiefungen vorgesehen sein können. Durch solche Maßnahmen kann eine Elastizität der Basis erreicht werden, die ein zumindest stellenweise bündiges Anordnen der Basis an der Wand der zylindrischen Ausnehmung unter leichter elastischer Verformung der Basis ermöglicht.

Mit der Basis kann ein Oberteil verbunden sein, das aus der zylindrischen Ausnehmung herausragt, wenn die Basis in die zylindrische Ausnehmung eingebracht ist. Dies erlaubt es einem Benutzer, leichter an das Oberteil heranzukommen, um z. B. ein an dem Oberteil fixiertes Bedienteil für die genannte Einrichtung zu bedienen. Insbesondere ist die Breite des Oberteils größer als der Durchmesser einer Getränkedose. Daher kann das insbesondere zylindrisch ausgeformte Oberteil den Rand der zylindrischen Ausnehmung so abdecken, dass der Rand von oben nicht sichtbar ist. Außerdem verhindert die größere Breite, dass auch das Oberteil in der zylindrischen Ausnehmung verschwindet, falls die Basis weniger tief ausgebildet ist als die zylindrische Ausnehmung.

Wenn in dieser Beschreibung von oben und unten die Rede ist, bezieht sich dies meist auf die zylindrische Ausnehmung eines Getränkedosenhalters unter der Annahme, dass dessen Zylinderachse in vertikaler Richtung verläuft und die Öffnung zum Einbringen von Getränkedosen oben liegt. Eine zylindrische Ausnehmung eines Getränkedosenhalters kann jedoch auch mit zumindest leicht gegen die vertikale geneigte Zylinderachse orientiert sein. Die Beschreibung gilt für diesen Fall entsprechend.

Der Einsatz ist beispielsweise vollständig aus Kunststoff gefertigt, z. B. aus Polyethylen. Vorzugsweise ist der Einsatz aus ABS/PC (Acrylnitril-Butadien-Styrol/Polycarbonat) gefertigt.

In bevorzugter Ausgestaltung weist der Einsatz ein bewegliches Teil auf, das relativ zu der Basis bewegt werden kann. Z. B. ist das Oberteil durch zwei Elemente gebildet, von denen eines (das untere) an der Basis befestigt ist und das andere gegen das befestigte Element beweglich ist. Dadurch kann z. B. ein Gelenk gebildet sein, das in der Art eines Kugelgelenks sowohl um die vertikale Achse gedreht werden kann als auch gegen die vertikale Achse verschwenkt werden kann. Unter der vertikalen Achse wird diejenige Achse verstanden, die bei in die zylindrische Ausnehmung eingebrachter Basis mit der Zylinderachse zusammenfällt oder parallel zu der Zylinderachse verläuft.

Ferner weist der Einsatz vorzugsweise Haltemittel zum Halten eines Gegenstandes in eine Position auf, in der sich der Gegenstand oberhalb der Basis befindet oder sich zumindest teilweise in die Basis hineinerstreckt. Bei dem Gegenstand kann es sich z. B. um die bereits erwähnte Bedieneinrichtung, z. B. eine Fernbedienung für die genannte elektrische und/oder elektronische Einrichtung in einem Kraftfahrzeug, handeln. Bei den Haltemitteln kann es sich um Haltemittel zum formschlüssigen und/oder kraftschlüssigen Halten des Gegenstandes an dem Einsatz handeln. Auch andere Arten der Fixierung des Gegenstandes an dem Einsatz sind möglich. Z. B. kann der Gegenstand in eine elastisch gepolsterte Ausnehmung eingebracht werden, die von dem Einsatz ausgebildet ist.

Insbesondere kann der Einsatz einen Oberflächenbereich aufweisen, der zugänglich ist, wenn der Einsatz in die zylindrische Ausnehmung eingebracht ist. Der Oberflächenbereich wird durch eine ebene Oberfläche gebildet. Dies ermöglicht es (z. B. unter Verwendung von beidseitig klebendem Klebeband) den Gegenstand auf den klebenden Oberflächenbereich aufzukleben.

In besonderer Ausgestaltung kann die Basis des Einsatzes zumindest eine Öffnung aufweisen, die von der Unterseite der Basis zugänglich ist. Die Öffnung ist mit Mitteln zum Halten eines Gegenstandes kombiniert, sodass ein entsprechend geformter, zumindest teilweise in die Öffnung eingebrachter Gegenstand von dem Einsatz gehalten wird. Es ist daher möglich, den Gegenstand in der Öffnung anzuordnen und den Einsatz mit dem von ihm gehaltenen Gegenstand in die Ausnehmung zum Halten von Getränkedosen einzusetzen. Wenn der Einsatz an seiner Oberseite entsprechend abgedeckt ist, kann der gehaltene Gegenstand dann nicht gesehen werden. Vorzugsweise ist der Gegenstand eine Münze oder ein Geldschein. Im Fall einer Münze ist die Öffnung vorzugsweise schlitzartig geformt und halten die Haltemittel die Münze in einer Position, in der die Münze noch aus der Öffnung hervorragt. Es können mehrere Münzschlitze, z. B. in einer Zwischendecke der Basis, vorgesehen sein.

Ferner wird hier ein Verfahren zum Fixieren eines Gegenstandes offenbart, das jedoch wegen der Beschränkungen des Gebrauchsmusterschutzes hier nicht zu den Erfindungsgegenständen gehört, für die Schutz beansprucht wird. Gemäß dem Verfahren wird ein Einsatz, insbesondere der Einsatz, der zuvor oder im Folgenden beschrieben wird, in eine im Wesentlichen zylindrische Ausnehmung eingebracht, welche der Aufnahme einer Getränkedose dient. Vor, während und/oder nach dem Einbringen des Einsatzes wird der Gegenstand an dem Einsatz fixiert. Bei dem Gegenstand kann es sich um eine Fernbedienung zum Bedienen einer elektrischen und/oder elektronischen Einrichtung in einem Kraftfahrzeug handeln, wobei die zylindrische Ausnehmung in einem Innenraum des Kraftfahrzeugs ausgeformt ist.

Ausführungsbeispiele der Erfindung werden nun unter Bezugnahme auf die beigefügte Zeichnung beschrieben. Die einzelnen Figuren der Zeichnung zeigen:
- Fig. 1: einen Einsatz für einen Getränkedosenhalter, wobei oben an dem Einsatz eine Fernbedienung angeordnet ist,
- Fig. 2: den Einsatz gemäß Fig. 1, jedoch ohne die Fernbedienung,
- Fig. 3: einen vertikalen Schnitt durch die in Fig. 1 dargestellte Anordnung, wobei die Schnittebene die vertikale Symmetrieachse des Einsatzes enthält,
- Fig. 4: eine Ansicht von oben auf das Oberteil des Einsatzes, wobei auch die Schnittebene von Fig. 3 dargestellt ist,
- Fig. 5: eine Explosionsdarstellung der Anordnung gemäß Fig. 1, die einen Einblick von oben in das Innere des Einsatzes ermöglicht,
- Fig. 6: eine weitere Explosionsdarstellung der Anordnung gemäß Fig. 1, wobei die Teile von der Seite betrachtet werden können,
- Fig. 7: eine Ansicht von unten auf die Basis des Einsatzes,
- Fig. 8: den Innenraum eines Personenkraftwagens mit einem Bedienteil für eine Freisprecheinrichtung, die in einem Getränkedosenhalter angeordnet ist,
- Fig. 9: schematisch einen Einsatz und eine darauf befestigte Freisprecheinrichtung und
- Fig. 10: eine speziell Ausführungsform eines Einsatzes.

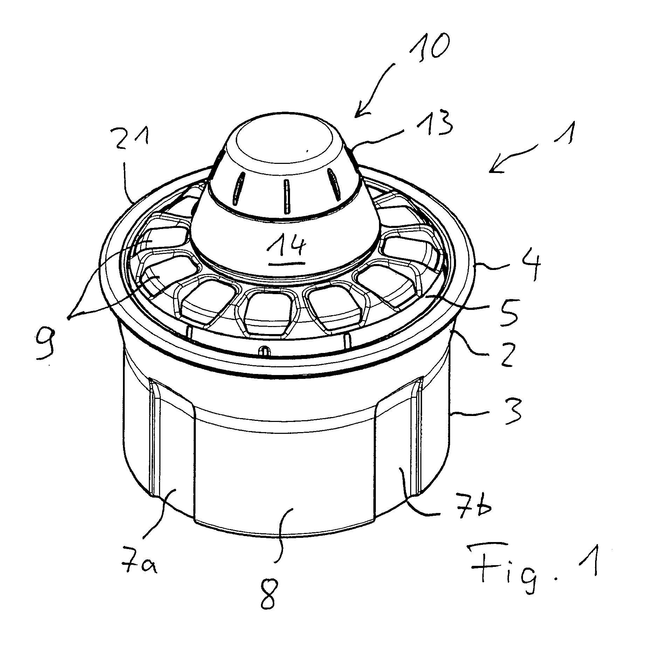

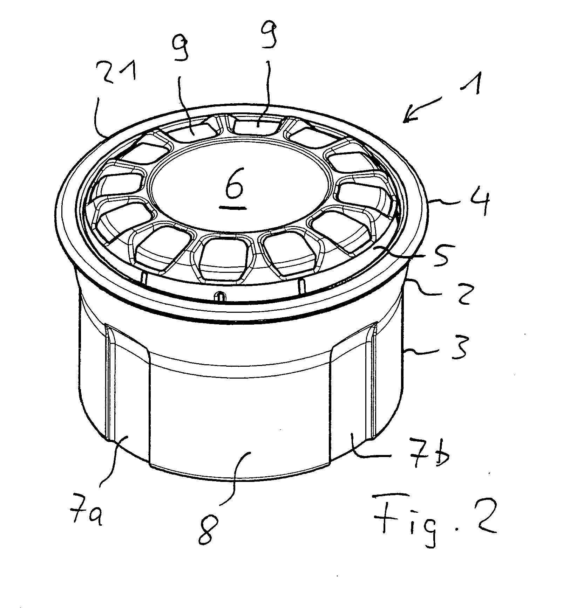

Der in Fig. 1 und Fig. 2 gezeigte Einsatz 1 für einen Getränkedosenhalter weist eine im Wesentlichen zylindrisch ausgeformte Basis 3 auf. Die sich über dem Umfang der Basis 3 erstreckende Außenoberfläche 8 weist jedoch auch vertiefte Bereiche 7a, 7b auf. Weitere vertiefte Bereiche sind auf der Rückseite der Basis 3 angeordnet.

Die Basis 3 ist vorzugsweise hohl und besteht aus Polyethylen oder Polypropylen. Vorzugsweise ist der Einsatz aus ABS/PC (Acrylnitril-Butadien-Styrol/Polycarbonat) gefertigt. Nach oben schließt sich an die Basis ein Oberteil 2 an, das teilweise aus einem Stück mit der Basis 3 gefertigt ist. Wie auch die Basis 3 ist das Oberteil 2 rotationssymmetrisch um die vertikale Symmetrieachse des Halters ausgebildet. Dabei können jedoch einzelne Details von der Rotationssymmetrie abweichen.

Das fest mit der Basis 3 verbundene Element 4 weist einen wulstförmigen kreisförmigen Rand 21 auf, an dem der Einsatz 1 seine größte Breite, d.h. wegen seiner rotationssymmetrischen Ausführung größten Durchmesser, erreicht. Das gesamte Oberteil 4 weist einen größeren Außendurchmesser auf als eine Getränkedose. Dagegen ist der Außendurchmesser der Basis 3 etwa gleich dem Außendurchmesser einer Getränkedose.

Ein zweites Element 5 des Oberteils 2 ist beweglich gegenüber dem Element 4. Das Element 5 erstreckt sich von oben nach unten in einen von dem Element 4 gebildeten Aufnahmeraum hinein, ragt jedoch an seiner Oberseite leicht aus dem Aufnahmeraum nach oben heraus.

In dem Ausführungsbeispiel ist der Aufnahmeraum so ausgebildet, dass die Elemente 4, 5 die Bewegungsmöglichkeiten eines Kugelgelenks für das Element 5 bilden. In dem Ausführungsbeispiel kann das Element 5 frei um die vertikale Achse verdreht werden. es sind jedoch Ausführungsformen möglich, bei denen das Element 5 lediglich über einen beschränkten Winkelbereich, z. B. von 60° um die vertikale Achse verdreht werden kann.

In dem Ausführungsbeispiel ist jedoch die Schwenkbewegung begrenzt und erlaubt ein Verkippen der Rotationsachse des Elements 5 gegen die Rotationsachse bzw. vertikale Achse des Elements 2 und der Basis 3 über einen Winkelbereich von z.B. 20°. Beide Winkelbereiche können bei anderen Ausführungsformen größer oder kleiner sein.

Das Element 5 weist zwölf Vertiefungen an seiner Oberseite auf, in die jeweils z.B. die Fingerkuppe einer Person passt. Auf diese Weise kann eine Person auf einfache Weise das Element 5 anfassen und in eine gewünschte Bewegungsstellung bringen. In Fig. 1 und Fig. 2 sind jeweils zwei der Vertiefungen mit dem Bezugszeichen 9 bezeichnet.

An der Oberseite des Elements 5 befindet sich in zentraler Position eine ebene Kreisfläche 6, die dort die Oberfläche des Elements 5 bildet. Auf diese Kreisfläche 6 kann das in Fig. 1 dargestellte Bedienteil 10 aufgeklebt werden.

Bei anderen Ausgestaltungen kann sich dort, wo sich die Kreisfläche 6 befindet, eine Öffnung einer sich nach unten in das Element 5 hinein erstreckenden Ausnehmung befinden, wobei die Ausnehmung so ausgeformt ist, dass ein entsprechend geformter Gegenstand in die Ausnehmung eingebracht werden kann und so sicher gegen ein unbeabsichtigtes Austreten aus der Ausnehmung gehalten wird.

Das Bedienteil 10 weist im Wesentlichen die Außenabmessungen eines Kegelstumpfes auf. Der obere Teil des Kegelstumpfes wird durch ein um die Rotationssymmetrieachse drehbares bewegliches Element 13 gebildet, so dass das Element 13 bei aufgeklebtem Bedienteil 10 gegen die Rotationsachse des Elements 5 verdreht werden kann. Das untere Element 14, welches den breiteren Teil des Kegelstumpfes bildet, ist dagegen im aufgeklebten Zustand fest mit dem Element 5 verbunden. Nicht dargestellt in Fig. 1 sind weitere Bedienelemente, z.B. Taster oder Schaltknöpfe, die an dem Bedienteil 10 angeordnet sein können, um Bedienfunktionen zu betätigen.

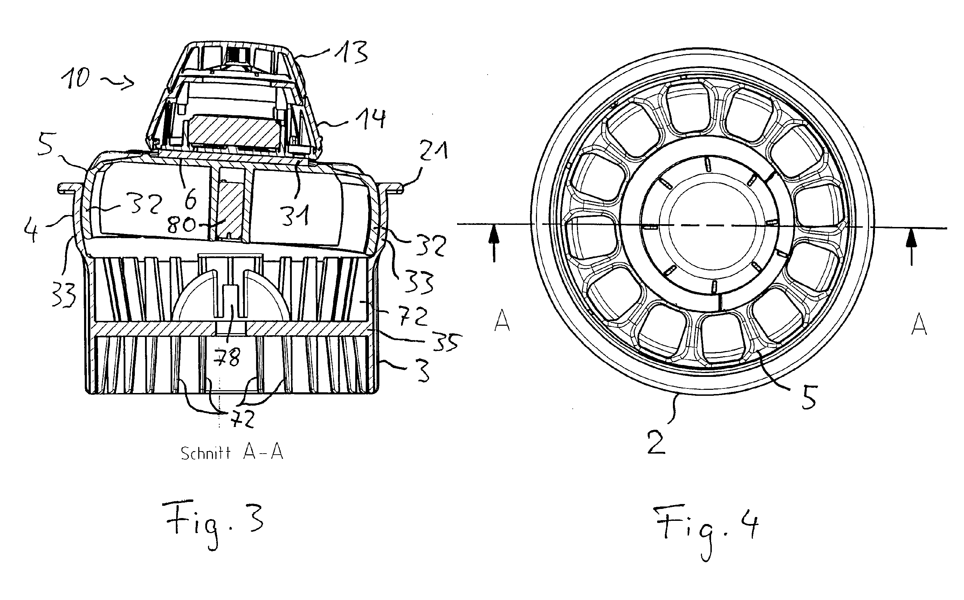

Aus der Schnittdarstellung von Fig. 3 ist erkennbar, dass das Bedienteil 10 über eine Klebstoffschicht 31 mit der kreisförmigen Oberfläche 6 des Elements 5 verbunden ist.

Ferner ist erkennbar, dass das Element 4 in seinem oberen Bereich einen Ring bildet (der Ring erstreckt sich um die vertikale Achse, welche in der Zeichnungsebene von Fig. 3 von oben nach unten verläuft). Dieser Ring 33 weist an seiner Ringinnenseite eine gekrümmte Oberfläche auf, die ein Segment einer Kugeloberfläche bildet.

Entsprechend geformt ist die Außenoberfläche eines ebenfalls ringförmigen Bereichs 32 des Elements 5, wobei die Außenoberfläche des ringförmigen Bereichs 32 bündig an der Innenoberfläche des ringförmigen Bereichs 33 anliegt und auf diese Weise ein Kugelgelenk bildet.

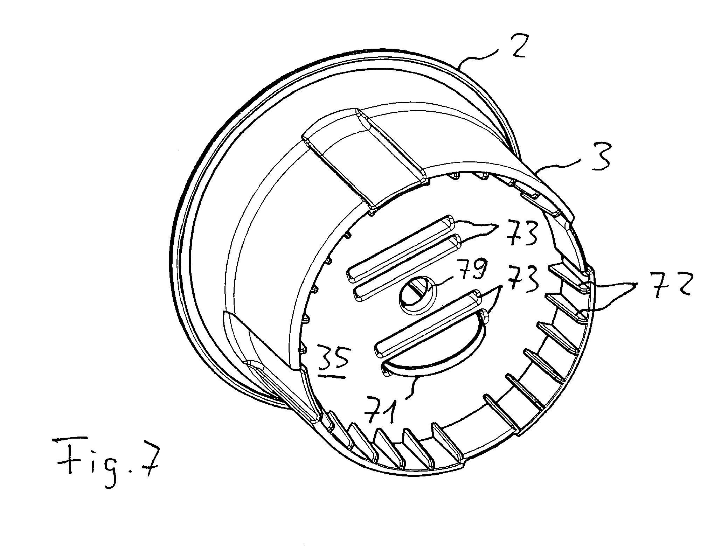

Ferner ist erkennbar, dass die Basis 3 an der Innenseite ihrer Außenwand eine Vielzahl von Rippen 72 aufweist (siehe auch Fig. 7), die der Versteifung der Basis 3 dienen. Die Rippen 72 erstrecken sich sowohl oberhalb als auch unterhalb einer in horizontaler Richtung verlaufenden Zwischendecke 35, die kreisförmig geformt ist und die Basis 3 somit aussteift.

Die Rippen 72 oberhalb der Zwischendecke 35 dienen auch als Anschlag für die Begrenzung der Schwenkbewegung, die ein Verkippen der Rotationsachse des Elements 5 gegen die Rotationsachse bzw. vertikale Achse des Elements 2 und der Basis 3 erlaubt.

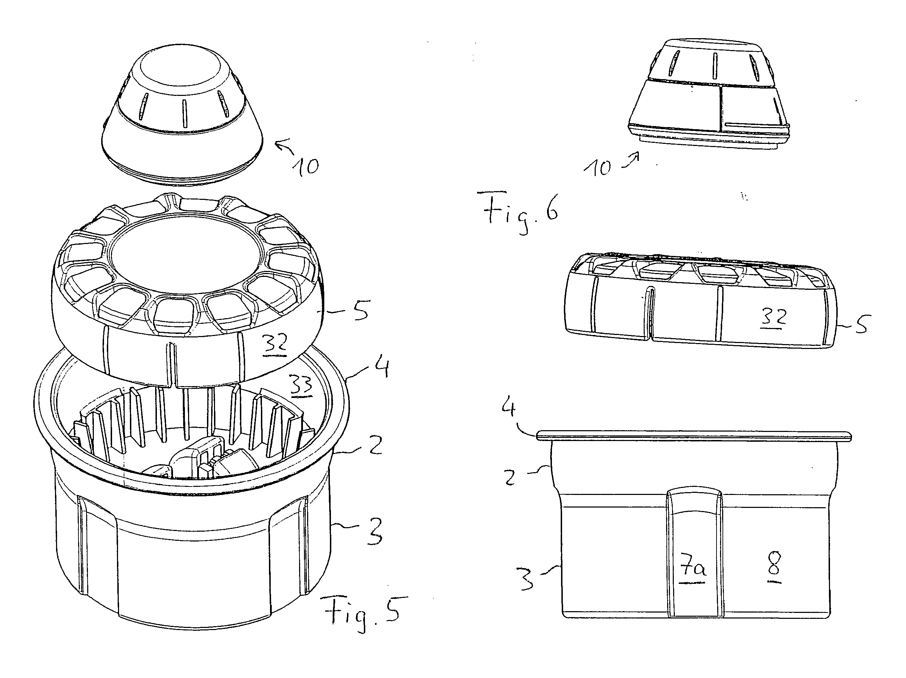

Fig. 5 und Fig. 6 lassen ebenfalls die anhand von Fig. 3 beschriebenen Merkmale erkennen.

Am besten aus Fig. 7 erkennbar ist, dass die Zwischendecke 35 vier nach unten offene Schlitze 73 aufweist, die parallel zueinander verlaufen und halbkreisförmig geformt sind. In die Schlitze 73 lässt sich jeweils eine Münze entsprechender Größe hineinstecken. Klemmmittel 78 (siehe Fig. 3) halten die Münze im Schlitz 73 fest.

Es ist daher möglich, den Einsatz aus der zylindrischen Ausnehmung des Getränkedosenhalters zu entnehmen, ein oder mehrere Münzen in die Schlitze 73 einzusetzen oder aus den Schlitzen 73 herauszunehmen und anschließend den Einsatz wieder in die zylindrische Ausnehmung einzusetzen. Das in Fig. 7 dargestellte, im Bild vorne liegende Ende der Basis 3 liegt nach dem Einsetzen unten in der zylindrischen Ausnehmung.

Aus Fig. 7 ist ferner erkennbar, dass die Zwischendecke 35 eine zentrale Durchgangsbohrung 79 aufweist, durch die hindurch eine Werkzeugspitze (z. B. das Ende eines Schraubendrehers) von unten bis zu einem Verstellelement 80 (siehe Fig. 3, z. B. eine Schraube) des beweglichen Elements 5 hindurchgeführt werden kann. Durch Einstellen der axialen Position (in Fig. 3 verläuft die Achse etwa in vertikaler Richtung) des Verstellelements 80 spreizt dieses das bewegliche Element 5 mehr oder weniger. Daher wird die Beweglichkeit des ringförmigen Bereichs 32 gegenüber dem Ring 33 mehr oder weniger gehemmt, d.h. muss eine größere oder kleinere Kraft zum Einstellen der Dreh- und/oder Kippstellung des beweglichen Elements 5 aufgebracht werden. Auch eine Arretierung des beweglichen Elements 5 ist möglich.

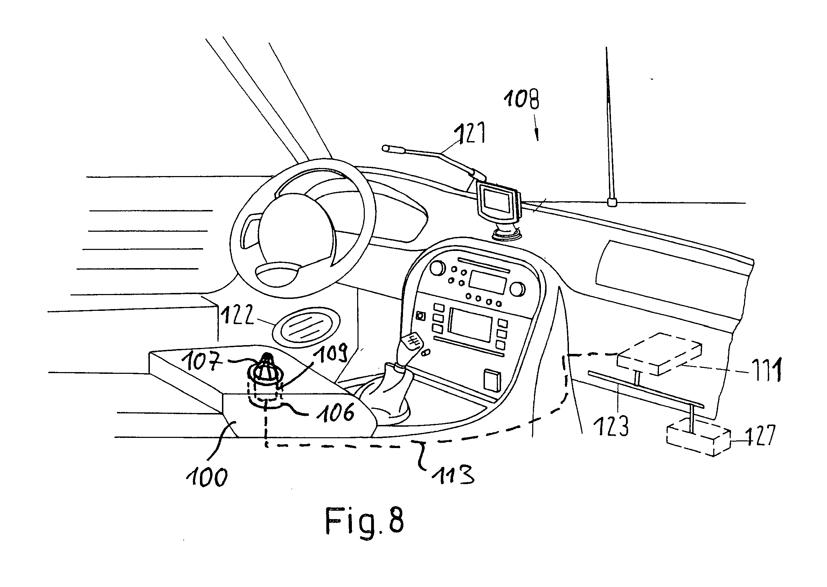

Fig. 8 zeigt die Front 108 und die Mittelkonsole 100 eines Fahrzeuginnenraums eines PKW. In die Mittelkonsole 100 ist ein Getränkedosenhalter 106 integriert. In der gezeigten Ausführungsform wird der Getränkedosenhalter 106 durch eine oben offene zylindrische Ausnehmung in der Mittelkonsole 100 gebildet.

In dem Getränkedosenhalter 106 ist ein Einsatz 109 angeordnet, an dem wiederum ein Bedienteil 107 zum Bedienen einer Freisprecheinrichtung 111 befestigt ist. Bei dem Einsatz 109 kann es sich z. B. um den zuvor anhand der anderen Figuren beschriebenen Einsatz handeln. Das Bedienteil kann das oben beschriebene Bedienteil 10 sein.

An die Freisprecheinrichtung 111 sind ein Lautsprechersystem 122 (mit zumindest einem Lautsprecher) und zumindest ein Mikrofon 121 angeschlossen. Die Freisprecheinrichtung 111 kann mit einem (in der Figur nicht dargestellten) Mobiltelefon zusammenwirken, das heißt beim Betrieb des Mobiltelefons zumindest akustische Signale des geführten Telefonats über das Lautsprechersystem 122 ausgeben und im Fahrzeuginnenraum gesprochene Worte, die von dem Mikrofon 121 in akustische Signale umgewandelt wurden, im Rahmen des Telefonats weiterleiten. Auch können optional die Freisprecheinrichtung 111 und/oder das mit der Freisprecheinrichtung 111 in Verbindung stehende Mobiltelefon über das Mikrofon 121 durch gesprochene Befehle gesteuert werden.

In den Getränkedosenhalter 106 ist ein Bedienteil zum Bedienen der Freisprecheinrichtung 111 eingesetzt oder es ist ein Bedienteil 107 auf einen Einsatz 109 aufgesetzt, der in dem Getränkedosenhalter 106 angeordnet ist.

Das Bedienteil kann alternativ oder zusätzlich auch der Steuerung anderer Einrichtungen als einer Freisprecheinrichtung 111 in dem Fahrzeug dienen, z. B. einer Radio- und/oder Stereoanlage, eines Infotainment-Systems und/oder eines Navigationssystems.

Das Bedienteil 107 ist über eine Kabelverbindung 113 mit der Freisprecheinrichtung 111 verbunden (bzw. in anderen Fällen mit der entsprechenden zu steuernden Einrichtung), um die Steuersignale, die durch die Bedienung des Bedienteils bewirkt werden, an die Freisprecheinrichtung 111 (bzw. andere Einrichtung) zu übertragen.

Alternativ kann das Bedienteil ohne Kabelverbindung mit der Freisprecheinrichtung 111 (bzw. der anderen Einrichtung) zusammenwirken. In diesem Fall werden die Steuersignale von dem Bedienteil durch eine drahtlose Verbindung zu der Freisprecheinrichtung 111 übertragen, z. B. über eine Verbindung gemäß dem Bluetooth-Standard.

In noch einer weiteren Variante wird nicht lediglich das Bedienteil zur Bedienung der Freisprecheinrichtung von den Getränkedosenhalter 106 gehalten, sondern die gesamte Freisprecheinrichtung. Die in Fig. 8 dargestellten Gegenstände 107, 109 stellen in diesem Fall die gesamte Freisprecheinrichtung dar. Sie kann optional über die Kabelverbindung 113 an das elektrische Bordnetz des Kraftfahrzeugs angeschlossen sein, um mit Energie aus dem Bordnetz betrieben werden zu können. Alternativ aber ist z. B. auch ein Betrieb über eine in die Freisprecheinrichtung integrierte Batterie oder einen Akku (aufladbaren Energiespeicher) möglich.

Das Bezugszeichen 123 bezeichnet in Fig. 8 einen Datenbus, über den die zu steuernde Einrichtung 111 mit weiteren Einrichtungen, z. B. der Einrichtung 127, verbunden sein kann.

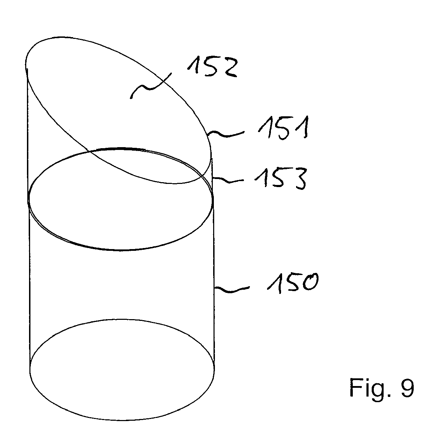

Fig. 9 zeigt das Prinzip, wie eine Freisprecheinrichtung 151 an einem Einsatz 150 für einen Getränkedosenhalter angeordnet sein kann. Die Freisprecheinrichtung 151 weist eine obere Oberfläche 152 auf, die gegenüber der Zylinderachse ihres zylindrisch geformten unteren Bereichs 153 geneigt ist. Die Freisprecheinrichtung 151 ist um die Zylinderachse gegenüber dem Einsatz 150 verdrehbar. Daher können nicht näher dargestellte Bedienelemente und ein in die Oberfläche 152 integrierter Lautsprecher z. B. auf den Fahrer oder Beifahrer eines PKW ausgerichtet werden. Der in Fig. 9 dargestellte Einsatz 150 ist ebenfalls zylindrisch gezeichnet. Hierbei handelt es sich jedoch lediglich um ein Beispiel. Der Einsatz kann auch anders ausgestaltet sein.

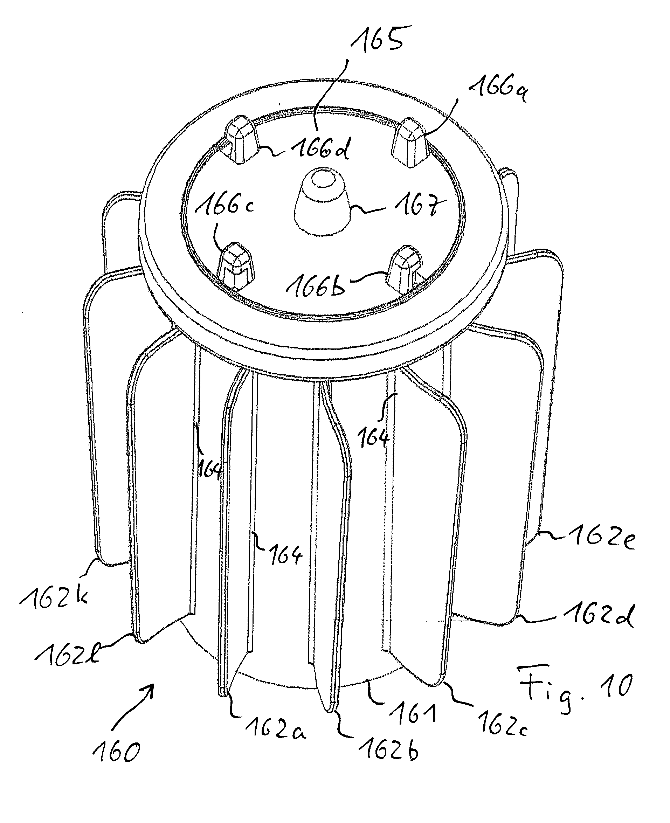

Ein konkretes Ausführungsbeispiel für einen Einsatz 160 zeigt Fig. 10. ein zylindrisch an innerer Teil 161 hat einen kleineren Außendurchmesser als der Innendurchmesser einer entsprechenden zylindrischen Ausnehmung eines Getränkedosenhalters. Jedoch weist der Einsatz 160 eine Mehrzahl von lamellenförmigen Vorsprüngen 162a bis 162l auf, die an dem Außenumfang des inneren Teils 161 befestigt sind, z. B. einstückig im Spritzgussverfahren gemeinsam mit dem inneren Teil hergestellt wurden. Die Bereiche 164, an denen die Lamellen an den inneren Teil befestigt sind bzw. in diesen übergehen, erstrecken sich parallel zu der Zylinderachse des inneren Teils 161. Die Lamellen können jedoch auch anders geformt sein oder anders mit dem inneren Teil verbunden sein. Z. B. können Sie sich in der Art einer Helix am Außenumfang des inneren Teils 161 teilweise um den Außenumfang herum erstrecken.

Oben in Fig. 10 erkennt man eine obere Oberfläche 165 des Einsatzes 160, auf die ein Bedienteil, z. B. eine Freisprecheinrichtung, aufgesetzt werden kann. Hierzu sind an der oberen Oberfläche 165 mehrere nach oben abragende Vorsprünge 166a bis 166d, 167 ausgeformt. Diese Vorsprünge 166, 167 können in entsprechende Ausnehmungen an dem Bedienteil eingreifen.

## Patentansprüche

1. Anordnung für ein Kraftfahrzeug, mit einem Bedienteil (107) zur Steuerung zumindest einer Einrichtung (111) in dem Kraftfahrzeug, wobei das Bedienteil (107) an einem Einsatz (1) befestigt ist oder Teil des Einsatzes ist, wobei der Einsatz (1) ausgestaltet ist, in einem Getränkedosenhalter (106) des Kraftfahrzeugs angeordnet zu werden.

2. Anordnung mit einem Getränkedosenhalter (106) in einem Kraftfahrzeug und mit einem Bedienteil (107) zur Steuerung zumindest einer Einrichtung (111) in dem Kraftfahrzeug, wobei das Bedienteil (107) in dem Getränkedosenhalter (106) angeordnet ist, so dass es von einer Person in dem Fahrzeug betätigbar ist.

3. Anordnung nach einem der vorhergehenden Ansprüche, wobei die von dem Bedienteil (107) zu steuernde Einrichtung in oder an dem Getränkedosenhalter (106) angeordnet ist, sodass sie von dem Getränkedosenhalter (106) gehalten wird, und wobei das Bedienteil Teil der zu steuernden Einrichtung ist oder an der zu steuernden Einrichtung befestigt ist.

4. Anordnung nach dem vorhergehenden Anspruch, wobei die zu steuernde Einrichtung eine Freisprecheinrichtung für den Betrieb von Mobiltelefonen ist, wobei die Freisprecheinrichtung über zumindest eine Kabelverbindung und/oder zumindest eine drahtlose Verbindung mit zumindest einem Lautsprecher und zumindest einem Mikrofon in dem Fahrzeug verbindbar ist oder verbunden ist.

5. Anordnung nach Anspruch 1 oder 2, wobei das Bedienteil (107) über eine Kabelverbindung (113) und/oder über eine drahtlose Verbindung mit der zu steuernden Einrichtung (111) verbunden ist, sodass über die Verbindung Steuersignale zur Steuerung des Betriebes der Einrichtung (111) übertragbar sind.

6. Anordnung nach einem der vorhergehenden Ansprüche, wobei der Einsatz (1) eine Basis (3) aufweist, die in eine im Wesentlichen zylindrische Ausnehmung des Getränkedosenhalters (106) eingebracht werden kann, welche der Aufnahme einer Getränkedose dient.

7. Anordnung nach dem vorhergehenden Anspruch, wobei die Basis (3) eine Breite aufweist, die gleich dem Durchmesser einer Getränkedose ist.

8. Anordnung nach einem der Ansprüche 6 und 7, wobei mit der Basis (3) ein Oberteil (2) verbunden ist, das aus der zylindrischen Ausnehmung herausragt, wenn die Basis (3) in die zylindrische Ausnehmung eingebracht ist.

9. Anordnung nach dem vorhergehenden Anspruch, wobei das Oberteil (2) eine Breite aufweist, die größer ist als der Durchmesser einer Getränkedose.

10. Anordnung nach einem der Ansprüche 6 bis 9, wobei der Einsatz (1) ein bewegliches Teil (5) aufweist, das relativ zu der Basis (3) bewegt werden kann.

11. Anordnung nach dem vorhergehenden Anspruch, wobei das bewegliche Teil (5) relativ zu der Basis (3) um eine vertikale Achse, die bei in die zylindrische Ausnehmung eingebrachter Basis (3) mit der Zylinderachse zusammenfällt oder parallel zu der Zylinderachse verläuft, gedreht werden kann und/oder gegen die vertikale Achse verschwenkt werden kann.

12. Anordnung nach einem der Ansprüche 6 bis 11, wobei der Einsatz (1) Haltemittel (5, 6) zum Halten eines Gegenstandes (10) in einer Position aufweist, in der sich der Gegenstand (10) oberhalb der Basis (3) befindet oder sich zumindest teilweise in die Basis (3) hinein erstreckt.

13. Anordnung nach einem der Ansprüche 6 bis 12, wobei die Basis (3) zumindest eine Öffnung (73) aufweist, die von der Unterseite der Basis zugänglich ist, und wobei die Öffnung (73) mit Mitteln zum Halten eines Gegenstandes kombiniert ist, sodass ein entsprechend geformter, zumindest teilweise in die Öffnung (73) eingebrachter Gegenstand von dem Einsatz (1) gehalten wird.

14. Anordnung nach einem der Ansprüche 1 bis 13, wobei der Einsatz einen inneren Teil (161) aufweist, von dem aus sich mehrere elastisch verformbare Vorsprünge (162) radial nach außen erstrecken.
